# EUROPÄISCHE PATENTANMELDUNG

(11) **EP 1 715 192 A1**
(43) Veröffentlichungstag der Anmeldung: **25.10.2006**
(21) Anmeldenummer: 05008808.7
(22) Anmeldetag: 21.04.2005
(51) Int. Cl.: F15B 1/02, F15B 11/06, F15B 11/15, F15B 15/14, F15B 15/26, B60S 9/12

(54) **Pneumatikzylinder**

(71) Anmelder: Krontec Maschinenbau GmbH, 93073 Neutraubling (DE)
(72) Erfinder: Tischler, Sam, 93053 Regensburg (DE); Jobst, Josef, 93059 Regensburg (DE)
(74) Vertreter: Grünecker, Kinkeldey, Stockmair & Schwanhäusser Anwaltssozietät

(57) **Zusammenfassung**

In einem Pneumatikzylinder (P), vorzugsweise einem Wagenheber für Wettbewerbsfahrzeuge, weist die Kolbenstange (S) einen mit einer Ringkammer (A) kommunizierenden Hohlraum (H) auf, der einen über eine Absperrvorrichtung gegenüber einer Füllöffnung (5) absperrbaren Druckspeicher für einen Kolbenrückführ-Druckpolster bildet, wobei der Kolben (K) in einem Zylinderrohr (Z) verschiebbar ist, das an einem Ausfahrende eine Dichtung (3) und an einem Befüllende eine Füllöffnung (5) aufweist, und die Ringkammer (A) für den Kolbenrückführ-Druckpolster vom Kolben (K), der Kolbenstange (S) und dem Zylinderrohr (Z) begrenzt ist.

## Beschreibung

Die Erfindung betrifft einen Pneumatikzylinder gemäß Oberbegriff des Patentanspruchs 1.

Bei dem aus DE 76 39 571 U bekannten Pneumatikzylinder, der als Wagenheber oder Luftheber (Air-Jack) für Wettbewerbsfahrzeuge, insbesondere Rennwagen, konzipiert ist, wird zwischen der massiven Kolbenstange und dem Zylinderrohr die Ringkammer mit einem Querschnitt definiert, der mehr als die Hälfte des Innenquerschnitts des Zylinderrohrs beträgt. Die Luft enthaltende Ringkammer ist durch die Umfangsdichtungen des Kolbens zur Füllöffnung einerseits und durch die von der Kolbenstange durchsetzte Dichtung am ausfahrseitigen Zylinderrohrende andererseits hermetisch abgeschlossen. Beim Verfahren des Kolbens durch dessen einseitige Druckbeaufschlagung aus der Füllöffnung wird die Luft als Luftpolster in der Ringkammer zunehmend komprimiert, bis der maximale Hubweg des Kolbens durch eine in der Ringkammer angeordnete Distanzhülse erreicht ist. Wird die Beaufschlagung des Kolbens aus der Füllöffnung beendet, dann bewirkt der Druckpolster in der Ringkammer die Rückführung des Kolbens zur eingefahrenen Stellung. Anstelle des Druckpolsters in der Ringkammer könnte auch eine Rückführfeder für die Rückführfunktion des Kolbens vorgesehen sein. Eine Rückstellfeder bedeutet jedoch unterwünschtes zusätzliches Gewicht des Pneumatikzylinders, der speziell bei einem Einsatz als Wagenheber in einem Wettbewerbsfahrzeug so leicht wie möglich sein soll. Demgegenüber ist das Gewicht des pneumatischen Druckpolsters für das Gesamtgewicht des Pneumatikzylinders vernachlässigbar. Es müssen das Zylinderrohr und die Kolbenstange um das axiale Maß der Distanzhülse länger sein als der eigentliche Nutzhub, wodurch zusätzlicher Einbauraum beansprucht wird und das Verhältnis zwischen dem Nutzhub und dem Gesamtgewicht des Pneumatikzylinders ungünstig ist. Die durch den vorgespannten Druckpolster erzeugbare Rückführkraft für den Kolben ist beim maximalen Ausfahrhub hoch, nimmt jedoch um so mehr ab, desto mehr sich der Kolben der voll eingefahrenen Stellung nähert. Deshalb ist die Rückführgeschwindigkeit, insbesondere kurz vor Erreichen der voll eingefahrenen Stellung niedrig, und wird der Kolben auch in der voll eingefahrenen Stellung nicht mehr nennenswert gehalten. Unter den in einem Wettbewerbsfahrzeug unvermeidlich starken Vibrationen und Beschleunigungskräften kann die Kolbenstange unkontrolliert ausfahren, wodurch die Betriebssicherheit des Pneumatikzylinders bei Verwendung als Wagenheber gefährdet ist. Eine schnelle und gleichmäßige Bewegung des Kolbens bis zur voll eingefahrenen Stellung wäre jedoch wichtig, weil das Fahrzeuggewicht nur am Anfang der Rückführbewegung mitwirkt und die Kolbenstange wegen der unbedingt freizuhaltenden Bodenfreiheit des Fahrzeugs zuverlässig voll eingefahren und unter allen Umständen festgehalten werden muss.

Weiterhin sind in der Praxis bei Wettbewerbsfahrzeugen Pneumatikzylinder als Wagenheber bekannt, deren durch Druckbeaufschlagung verschiebbarer Kolben durch eine Rückholfeder zurückgestellt wird, wobei die Rückholfeder eine Druckfeder oder eine Zugfeder sein kann. Die Rückholfeder muss den Kolben mit der Kolbenstange so schnell wie möglich zurückführen und in der eingefahrenen Stellung die Masse des Kolbens mit der Kolbenstange gegen ein ungewolltes Verstellen bei Erschütterungen oder starken Beschleunigungskräften sichern. Deshalb wird die Rückholfeder relativ stark und progressiv ausgelegt, wodurch sie jedoch einen großen Anteil am Gesamtgewicht des Pneumatikzylinders beansprucht. Zur Anpassung des Hubwegs des Pneumatikzylinders an unterschiedliche Fahrzeuge müssen nicht nur das Zylinderrohr und die Kolbenstange andere Längen haben, sondern muss dann auch eine in der Länge passende Rückholfeder beschafft und eingebaut werden, was einen nachteiligen Zeit- und Kostenfaktor bedeutet.

Ein bevorzugter Einsatzfall für solche Pneumatikzylinder sind Wettbewerbsfahrzeuge wie Rennwagen, die bei einem Boxenstopp rasch angehoben und rasch abgesenkt werden. Die Zeiten für das Anheben und für das Absenken sollen so kurz wie möglich sein, weil während dieser Zeiten am Wettbewerbsfahrzeug keine Arbeiten ausgeführt werden können. Ferner müssen Pneumatikzylinder als Wagenheber für Wettbewerbsfahrzeuge so leicht wie möglich und dennoch stabil sein, weil gerade bei einem Wettbewerbsfahrzeug jedes eingesparte Gramm an Gewicht wertvoll ist, im Regelfall mindestens drei oder vier solche Pneumatikzylinder pro Fahrzeug vorgesehen sind, und häufig Arbeiten relativ grob ausgeführt werden.

Der Erfindung liegt die Aufgabe zugrunde, einen Pneumatikzylinder der eingangs genannten Art anzugeben, der betriebssicher und leicht ist und schnelle Ein- und Ausfahrbewegungen ermöglicht.

Die gestellte Aufgabe wird mit den Merkmalen des Patentanspruchs 1 gelöst.

Dank des Druckspeichers für den Druckpolster lässt sich ein so großes Volumen mit vorgespannter Druckluft bereitstellen, dass eine sehr starke nahezu konstante Rückführkraft über den vollen Hubweg des Kolbens erzeugt werden kann. Der Nutzhub des Kolbens relativ zur Länge des Zylinderrohres ist optimal lang, weil dank des Volumens im Druckspeicher die Ringkammer-Axiallänge bis auf Null verkleinert werden kann und dabei Druckluft aus der Ringkammer in den Druckspeicher verlagert wird. Die in den Pneumatikzylinder integrierte pneumatische Rückholfeder ermöglicht eine sehr kurze Rückholzeit und hohe Rückholgeschwindigkeit für den Kolben, wie dies beispielsweise bei Verwendung des Pneumatikzylinders als Wagenheber eines Wettbewerbsfahrzeugs zweckmäßig ist. Da ferner aufgrund des in Bezug auf die Länge des Zylinderrohrs optimal langen Nutzhub des Kolbens das Verhältnis zwischen dem Gesamtgewicht des Pneumatikzylinders und dem Nutzhub günstig und dabei das Gewicht der pneumatischen Rückholfeder, d.h. des Gewichts der im Druckspeicher komprimierten Luft, vernachlässigbar sind, wird ein Pneumatikzylinder bereitgestellt, der bei geringem Gewicht einen optimalen Arbeitshub leistet und eine sehr kurze Rückstellzeit ermöglicht. Dies ist allgemein für Anwendungsfälle von Vorteil, bei denen es auf geringes Gewicht und kurze Rückholzeit ankommt, und insbesondere bei Verwendung des Pneumatikzylinders als Wagenheber eines Wettbewerbsfahrzeugs. Da die pneumatische Feder keine körperliche Feder wie eine Schraubenfeder ist, brauchen für eine andere Baulänge oder einen anderen Nutzhub des Pneumatikzylinders nur das Zylinderrohr und die Kolbenstange bzw. das Kolbenrohr mit anderer Länge bereitgestellt zu werden, hingegen keine maßgeschneiderte Rückholfeder. Diese Bauweise ist deshalb kostengünstig.

Zweckmäßig weist der Druckspeicher ein Füllvolumen auf, das ein Vielfaches des maximalen Volumens der Ringkammer beträgt. Dank dieses Volumenverhältnisses wirkt sich die Volumensveränderung der Ringkammer bei der Hubbewegung des Kolbens kaum auf die Rückholkraft der pneumatischen Feder aus, d.h., die Rückholkraft ist feinfühlig einstellbar und bleibt über den gesamten Hub des Kolbens nahezu konstant. Durch die Druckvorspannung des Druckpolsters und die auch bei voll eingefahrenem Kolben dann wirkende Rückholkraft wird der Kolben mit der Kolbenstange sehr sicher in der eingezogenen Position festgelegt. Dies ist bei Verwendung des Pneumatikzylinders als Wagenheber für Wettbewerbsfahrzeuge wichtig, damit die Kolbenstange nicht unkontrolliert ausfährt.

Baulich einfach ist die Kolbenstange ein am Ausfahrende verschlossenes Kolbenrohr. Das Kolbenrohr bildet ein großes Nutzvolumen als Druckspeicher und ist bei geringem Gewicht sehr stabil.

Die Absperrvorrichtung ist zweckmäßig ein Rückschlagventil, das durch den Befülldruck selbsttätig öffnet und nach Abbau des Befülldrucks selbsttätig schließt und den Druckpolster in vorgespanntem Zustand hält.

Bei einer zweckmäßigen Ausführungsform ist das Rückschlagventil in einem Boden des Kolbens oder in einem im Kolbenrohr platzierten Boden bei einem Bodendurchgang angeordnet, wobei es die Hubbewegung des Kolbens mitmacht.

Bei einer alternativen Ausführungsform könnte ein Lade- und/oder Ablass-Ventil im Kolbenrohr oder im Verschlussdeckel des Kolbenrohrs untergebracht sein, so dass der Druckspeicher nicht über die Füllöffnung gefüllt und vorgespannt oder entlastet wird, sondern über dieses getrennte Ventil.

Bei einer zweckmäßigen Ausführungsform ist der Außendurchmesser des Kolbenrohrs um ca. 5 bis 15 %, vorzugsweise um etwa 7,5 %, kleiner als der Innendurchmesser des Zylinderrohrs. Ein solches Durchmesserverhältnis, bei dem grundsätzlich der Außendurchmesser des Kolbenrohrs nur geringfügig kleiner ist als der Innendurchmesser des Zylinderrohrs, führt zu einem relativ kleinen Querschnitt der Ringkammer. Dies ist jedoch kein Nachteil, weil sich durch die Druckvorspannung jede gewünschte Rückholkraft präzise einstellen und auf die gewünschte Hubkraft des Pneumatikzylinders so abstimmen lässt, dass entweder zugunsten einer sehr hohen Hubkraft eine bestimmte Rückstellzeit, oder zugunsten einer optimal kurzen Rückholzeit eine bestimmte Hubkraft erzielt wird. Dabei ist es durchaus möglich, den Druckspeicher mit einem höheren Druck vorzuspannen als den Druck, mit dem der Kolben verfahren wird, da das Rückschlagventil das vorgespannte Druckluftvolumen einsperrt.

Um die Betriebssicherheit des Pneumatikzylinders zu erhöhen, ist bei einer bevorzugten Ausführungsform eine Verriegelungsvorrichtung vorgesehen, mit der der Kolben in der eingefahrenen Position gegenüber dem Zylinderrohr verriegelbar ist. ggfs. zusätzlich zur Haltewirkung des Luftpolsters. Vibrations- und/oder Beschleunigungskräfte können die Kolbenstange nicht mehr unkontrolliert ausfahren. Dies ist speziell für einen Wagenheber für ein Wettbewerbsfahrzeug wichtig.

Dabei ist die Verriegelungsvorrichtung zweckmäßig eine durch Druckbeaufschlagung aus der Füllöffnung lösbare Kugelverrastung. Die Kugelverrastung legt den Kolben in der eingefahrenen Position solange fest, bis er durch Druckbeaufschlagung auszufahren ist, so dass sich für die Ausfahrbewegung kein Zeitverzug ergibt.

Bei einer zweckmäßigen Ausführungsform ist die Kugelverrastung zwischen einem die Füllöffnung enthaltenden, hohlen Verschlusskörper des Zylinderrohrs und einem Fortsatz des Kolbens angeordnet. Der Verschlusskörper weist einen Entsperrkolben für die Kugelverrastung und Rastvertiefungen für Rastkugeln auf. Der Fortsatz des Kolbens besitzt hingegen die Rastkugeln enthaltende Öffnungen und einen federbelasteten Sperrteil, mit dem die in die Rastvertiefungen eingreifenden Rastkugeln blockiert werden. Die Rastkugeln, der Fortsatz und der Sperrteil machen in diesem Fall die Hubbewegungen des Kolbens mit. Bei einer alternativen Ausführungsform könnte die Kugelverrastung jedoch auch im Verschlussteil stationär angeordnet sein und mit einem Sperranschlag des Kolbens zusammenwirken.

Bei einer bevorzugten Ausführungsform ist zur Sicherung der gelösten Rastkugeln gegen Herausfallen eine federbelastete Kugel-Haltehülse am Fortsatz beweglich angeordnet. Sobald sich der Kolben vom Verschlusskörper zu lösen beginnt, schiebt sich die Haltehülse über die Kugeln oder die die Kugeln enthaltenden Öffnungen, so dass auch der Sperrteil durch die Kugeln in vorgespanntem Zustand gehalten bleibt. Bei Annäherung des Kolbens an den Verschlusskörper wird die Haltehülse vom Verschlusskörper verdrängt, so dass die Kugelverrastung ordnungsgemäß eingerückt wird.

Bei einer vorzugsweisen Ausführungsform ist der Entsperrkolben ein druckabhängig verstellbarer Differentialkolben mit unterschiedlich großen Beaufschlagungsflächen, für den zur Führung und Abdichtung zwei entsprechend unterschiedlich große Führungsflächen im Verschlusskörper vorgesehen sind. Durch die unterschiedlich großen Beaufschlagungsflächen ist sichergestellt, dass selbst bei hoher Druckvorspannung des Druckspeichers die Kugelverrastung auch mit einem relativ niedrigen Druck aus der Füllöffnung entsperrbar ist. In der Entsperrstellung des Differentialkolbens hält die kleinere Beaufschlagungsfläche den Systemdruck.

Zum Befüllen ist zweckmäßig im Verschlusskörper mindestens ein mit einem Rückschlagventil ausgestatteter Füllkanal angeordnet, der sich zwischen dem Bodendurchgang zum Druckspeicher und der größeren Führungsfläche erstreckt. Über den Füllkanal werden der Druckspeicher druckvorgespannt und der Kolben in Ausfahrrichtung druckbeaufschlagt.

Weiterhin ist im Verschlusskörper wenigstens ein Entlüftungskanal vorgesehen, der sich zwischen der kleineren Führungsfläche und der Außenseite des Pneumatikzylinders erstreckt. Zweckmäßig ist eine Vielzahl um die Achse verteilter Entlüftungskanäle vorgesehen, um ein möglichst großes Luftvolumen in kürzester Zeit ablassen zu können (kurze Rückholzeit). Der Entsperrkolben hat die zusätzliche Aufgabe, die Freigabe oder das Blockieren der Entlüftungskanäle zu bewirken.

Der Sperrteil für die Kugelverrastung ist zweckmäßig ein Stößel aus hochfestem und leichtem Material, beispielsweise aus Titan, weil er sehr hohen Beschleunigungs- und Verzögerungskräften ausgesetzt ist und mechanisch hoch belastet wird.

Damit kostengünstig unter Verwendung möglichst vieler Gleichteile Pneumatikzylinder mit unterschiedlichen Nutzhüben erstellbar sind, ist es zweckmäßig, wenn das Zylinderrohr und das Kolbenrohr abgelängte Rohrabschnitte sind, die mit den weiteren Komponenten jeweils lösbar verbunden, vorzugsweise verschraubt, sind. Für einen anderen Nutzhub brauchen nur das Zylinderrohr und das Kolbenrohr getauscht oder Zylinder- und Kolbenrohre anderer Längen verwendet zu werden, um mit den weiteren, Gleichteile bildenden Komponenten einen Pneumatikzylinder für einen anderen Nutzhub zu erstellen. Dies ist kostengünstig.

Zur einfachen Festlegung des Pneumatikzylinders in einer Tragstruktur, z.B. in einem Tragrahmen eines Wettbewerbsfahrzeugs, sollte das Zylinderrohr wenigstens einen Außengewindeabschnitt für eine Befestigungsmutter aufweisen.

Im Hinblick auf möglichst geringes Gewicht sollten die Komponenten des Pneumatikzylinders unter weitgehender Verwendung von Leichtmetall oder von Leichtmetall-Legierungen hergestellt sein. Im Regelfall werden der Sperrteil und die Kugeln der Kugelverrastung aus Stahl und/oder Titan oder anderen festen und dennoch leichten Werkstoffen und das Rückschlagventil-Verschließglied im Füllkanal aus leichtem Kunststoff bestehen. Die anderen Komponenten tragen unter weitgehender Verwendung von Leichtmetall oder Leichtmetall-Legierungen zu einem möglichst geringen Gesamtgewicht des Pneumatikzylinders bei.

Eine Ausführungsform wird anhand der Zeichnungen erläutert. Es zeigen:
- Fig. 1: einen Längsschnitt eines Pneumatikzylinders in eingefahrenem, verriegeltem Zustand,
- Fig. 2: einen Längsschnitt in einer ersten Betriebsphase des Pneumatikzylinders, und
- Fig. 3: einen Längsschnitt einer weiteren Betriebsphase des Pneumatikzylinders.

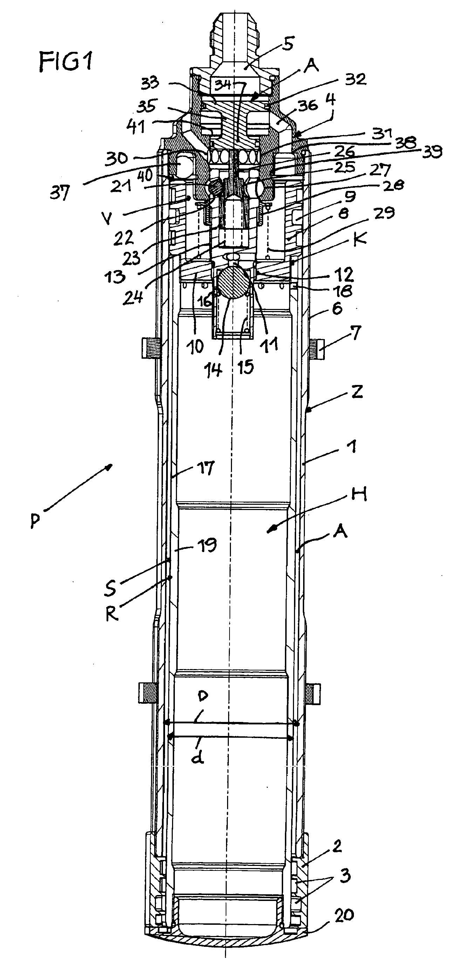

Ein Pneumatikzylinder P in Fig. 1 weist ein Zylinderrohr Z in Form eines abgelängten Rohrabschnitts 1 auf, auf dessen ausfahrseitigem (unterem) Ende ein Haltering 2 für wenigstens eine Gleitdichtung 3 lösbar befestigt, vorzugsweise aufgeschraubt, ist, und auf dessen befüllseitigem (oberem) Ende ein domförmiger, hohler Verschlusskörper 4 lösbar befestigt, vorzugsweise eingeschraubt, ist. Der Verschlusskörper 4 ist mit einem eine Füllöffnung 5 aufweisenden Fitting ausgestattet, der eingeschraubt oder auf andere Weise festgelegt sein kann. Das Zylinderrohr Z weist wenigstens einen Außengewindeabschnitt 6 für eine Befestigungsmutter 7 auf.

Im Zylinderrohr Z ist ein Kolben K abgedichtet verschiebbar geführt, der bei der gezeigten Ausführungsform als Topfkolben mit einer Kolbenschürze 8 mit Dichtungsnuten 9 und einem Boden 10 mit einem zentralen Bodendurchgang 11 ausgebildet ist. Der Bodendurchgang 11 ist in einem Fortsatz 13 geformt, der in eine Gewindebohrung 12 im Boden 10 eingeschraubt ist und sich vom Boden 10 nach oben und nach unten erstreckt. Im unteren, nach unten offenen Teil des Fortsatzes 13 ist ein Rückschlagventil enthalten, das aus einem kugelförmigen Schließglied 14 (z.B. eine Kunststoff- oder Leichtmetallkugel) und einem vom Bodendurchgang 11 gebildeten Ventilsitz sowie einer gegebenenfalls schwachen Ventilfeder 15 besteht. Angrenzend an den Boden 10 erstrecken sich seitliche Durchbrüche 16 durch die Wand des unteren Teils des Fortsatzes 13.

Mit dem Kolben K ist eine Kolbenstange S verbunden, die bei der gezeigten Ausführungsform durch ein Kolbenrohr R gebildet wird, das als abgelängter Rohrabschnitt 17 mit dem Boden 10 und einer Verschlusskappe 20 andererseits lösbar verbunden, vorzugsweise verschraubt, ist. Beispielsweise angrenzend an den Boden 10 sind im Kolbenrohr 17 seitliche Durchgänge 18 vorgesehen, über welche ein innen im Kolbenrohr R definierter Hohlraum H mit einer vom Kolbenrohr R, dem Zylinderrohr Z, dem Kolben K und dem Haltering 2 begrenzten Ringkammer A kommuniziert.

Der Außendurchmesser d des Rohrabschnitts 17 ist nur geringfügig kleiner als der Innendurchmesser D des Rohrabschnitts 1 des Zylinderrohrs Z. Beispielsweise ist der Außendurchmesser d zwischen etwa 5 bis 15 % kleiner, vorzugsweise um etwa 7,5%, als der Innendurchmesser des Rohrabschnitts 1. Das Volumen der Ringkammer A beträgt in der Betriebsposition in Fig. 1 nur einen Bruchteil des um ein Vielfaches größeren Volumens des Hohlraums H.

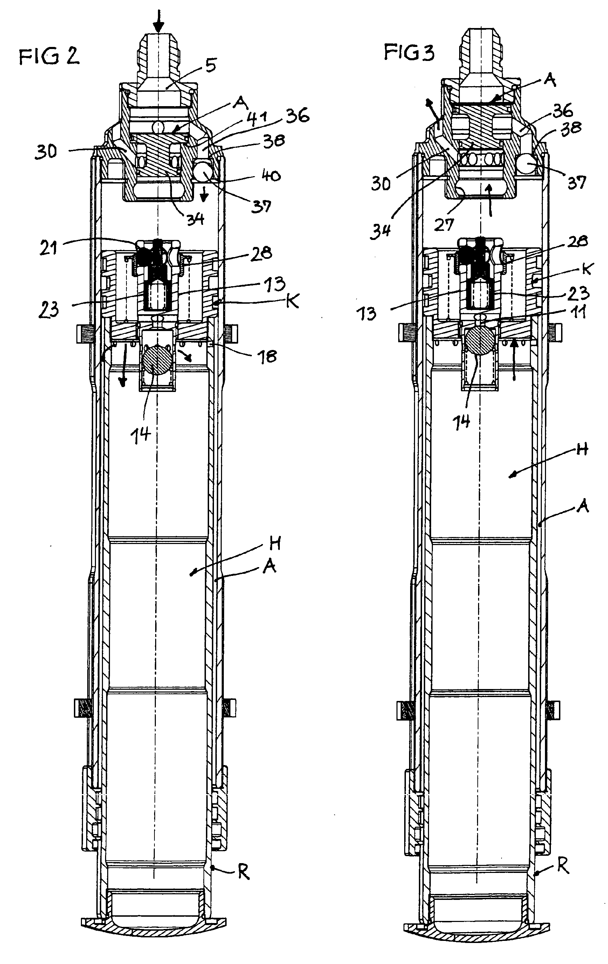

In der in Fig. 1 gezeigten, voll eingefahrenen und verriegelten Position des Kolbens K wirkt eine Verriegelungsvorrichtung V, um den Kolben K relativ zum Zylinderrohr Z festzulegen. Bei der gezeigten Ausführungsform ist die Verriegelungsvorrichtung V eine Kugelverrastung mit mehreren in Umfangsrichtung verteilten Kugeln 21 (z.B. aus Stahl oder Titan), die in Öffnungen 22 des Fortsatzes 13 radial beweglich untergebracht sind und mit Rastvertiefungen 27 in der Innenseite des Verschlusskörpers 4 in Eingriff stehen. Zum Verstellen und Halten der Kugeln 21 in den gezeigten Verriegelungspositionen ist innen im Fortsatz 13 ein Sperrteil 23 axial beweglich untergebracht, der durch eine Feder 24 nach oben beaufschlagt ist, und eine kegelige oder gerundete Rampe 25 und einen nach oben stehenden Stößel 26 aufweist. In der gezeigten Verriegelungsstellung ist der Sperrteil 23 durch die Feder 24 nach oben verschoben, so dass er die Kugeln 21 in den Öffnungen 22 nach außen in die Rastvertiefungen 27 drückt. Wird der Sperrteil 23 gegen die Kraft der Feder 24 nach unten verschoben (Fig. 2, 3), dann gibt die Rampe 25 die Kugeln 21 frei, die aus den Rastvertiefungen 27herausgehoben werden und den Kolben K vom Verschlusskörper 4 lösen.

Auf der Außenseite des oberen Teils des Fortsatz 13, z.B. einem Einschraubventilkörper ist eine Kugel-Haltehülse 28 axial verschieblich, die von einer Feder 29 nach oben beaufschlagt wird und funktionell mit dem unteren Ende des Verschlusskörpers 4 zusammenarbeitet, wenn der Fortsatz 13 in den Verschlussteil 4 einzutauchen beginnt.

Im Verschlusskörper 4 ist ein Entsperrkolben A zwischen der in Fig. 1 und 3 gezeigten Abschlussstellung und einer tiefer liegenden Entsperrstellung (Fig. 2) abgedichtet verschieblich geführt. Der Entsperrkolben A ist ein Differentialkolben mit einer großdurchmessrigen Kolbenscheibe 33 mit großer Beaufschlagungsfläche, einer kleineren Kolbenscheibe 34 mit kleinerer Beaufschlagungsfläche, und einem sich dazwischen erstreckenden Taillenbereich 35. Zur Zusammenarbeit mit dem Entsperrkolben A sind im Verschlusskörper 4 großdurchmessrige und kleindurchmessrige Führungsflächen 32, 31 geformt, die über eine Schulter 41 ineinander übergeführt sind. In der kleindurchmessrigen Führungsfläche 31 münden durch den Verschlusskörper 4 bis zur Außenseite des Pneumatikzylinders P geführte Entlüftungskanäle 30 auf einer Höhe, die so gewählt ist, dass in der in Fig. 1 und 3 gezeigten Abschlussstellung des Entsperrkolbens A die Kolbenscheibe 34 die Mündungen der Entlüftungskanäle 30 freigibt, so dass eine Strömungsverbindung zum unteren offenen Ende der Innenbohrung des Verschlusskörpers 4 existiert. In der Entsperrstellung des Entsperrkolbens A in Fig. 2 ist die kleindurchmessrige Kolbenscheibe 34 über die Entlüftungskanäle 30 nach unten verfahren, so dass diese gegenüber dem unteren Ende des Verschlusskörpers 4 abgesperrt sind.

Ferner verlaufen im Verschlusskörper 4 außenliegende Füllkanäle 36 (ggfs. mindestens einer), die sich zwischen der großdurchmessrigen Führungsfläche 32 und dem Kolben K erstrecken. In jedem Füllkanal 36 ist ein Rückschlagventil enthalten, das in Strömungsrichtung zur Füllöffnung 5 sperrt und aus einem Kunststoff-Schließkörper (einer Kunststoffkugel 37) und einem Ventilsitz 38 im Füllkanal 36 besteht. In einer Haltenut 39 des Verschlusskörpers 4 ist ein Sicherungsring 40 festgelegt, beispielsweise ein Seegerring, der das Herausfallen der Kugeln 37 nach unten verhindert und dennoch eine Strömungsverbindung offen lässt.

Bis auf die Kugeln 21, den Sperrteil 23, die Kugel 14 und die Kugeln 37 und die nicht näher hervorgehobenen Dichtungen können alle oder nahzu alle Komponenten des Pneumatikzylinders P aus Leichtmetall oder Leichtmetall-Legierungen hergestellt sein.

Bei einer nicht gezeigten Ausführungsform könnte die Verriegelungsvorrichtung V stationär am Verschlusskörper 4 verbleiben und mit einem entsprechenden Dorn am Kolben K zusammenwirken. Ferner könnte anstelle des Rückschlagventils 14, 11 an geeigneter Stelle des Kolbenrohrs R oder im Verschlussdeckel 20 ein getrenntes Lade- und/oder Ablassventil platziert sein, das das Befüllen oder Entlasten des vom Hohlraum H definierten Druckspeichers unabhängig von der Füllöffnung 5 ermöglicht.

### Funktion:

Es wird vorausgesetzt, dass der Pneumatikzylinder P in Fig. 1 im Wesentlichen drucklos ist. Die Stellung von Fig. 1 würde sich jedoch auch bei druckvorgespanntem Hohlraum H ergeben. Um die Ringkammer A und den einen Druckspeicher darstellenden Hohlraum H mit Druckluft zu füllen, wird die Füllöffnung 5 mit einer Druckquelle verbunden (Pfeil in Fig. 2). Der Fülldruck beaufschlagt den Entsperrkolben A auf der großen Beaufschlagungsfläche der Kolbenscheibe 33, so dass der Entsperrkolben A rasch nach unten verlagert wird, bis die kleindurchmessrige Kolbenscheibe 34 die Mündungen der Entlüftungskanäle 30 überfährt und die großdurchmessrige Kolbenscheibe 33 auf der Schulter 41 aufsitzt (Fig. 2). Die Entlüftungskanäle 30 sind sowohl gegenüber dem Kolben K als auch gegenüber der Füllöffnung 5 abgesperrt. Der Fülldruck gelangt durch die Füllkanäle 36 und über die dabei öffnenden Rückschlagventile 37, 38 zum Kolben K. Gleichzeitig hat der Entsperrkolben A über den Stößel 26 den Sperrteil 23 gegen die Kraft der Feder 24 nach unten geschoben, so dass sich die Kugeln 21 aus den Rastvertiefungen 27 lösen. Der Fülldruck hebt den Schließkörper 14 gegen die Kraft der Feder 15 vom Ventilsitz des Bodendurchgangs 11 ab und gelangt über die Durchgänge 16 in den Hohlraum H und über die Durchgänge 18 in die Ringkammer A. Aufgrund des Drosseleffekts in dem Bodendurchgang 11 kann sich der Kolben K (Fig. 2) vom Verschlusskörper 4 lösen und nach unten bewegen, wobei sich die axiale Länge der Ringkammer A zu verkürzen beginnt. Das Kolbenrohr R fährt durch die Dichtung 3 aus, beispielsweise bis der Kolben K am Haltering 2 abgefangen wird. Der vom Hohlraum H gebildete Druckspeicher wird bis auf eine gewünschte Druckhöhe aufgeladen, die mit der Ringfläche entsprechend (D-d) die Größe der Rückholkraft für den Kolben H bestimmt. Die Ausfahrbewegung des Kolbens K und des Kolbenrohrs R kann, bereits falls der Pneumatikzylinder P beispielsweise in ein Wettbewerbsfahrzeug eingebaut ist, zum Anheben des Fahrzeugs genutzt werden. Andererseits ist es möglich, den Druckspeicher beim Hersteller des Pneumatikzylinders P oder vor dessen Einbau in ein Fahrzeug aufzuladen.

Ist die vorbestimmte Aufladung erreicht, wird die Füllöffnung 5 druckentlastet (Fig. 3). Der oberhalb des Kolbens K herrschende Druck beaufschlagt die kleindurchmessrige Kolbenscheibe 34 nach oben und drückt die Kugeln 37 auf die Ventilsitze 38. Der Entsperrkolben A fährt nach oben in die in Fig. 3 gezeigte Stellung, wobei die Mündungen der Entlüftungskanäle 30 freigegeben werden und der Druck oberhalb des Kolbens K schlagartig nach außen abgebaut wird. Der Druckpolster im Hohlraum H und in der Ringkammer A wirkt auf die Differenzfläche zwischen dem Innendurchmesser D des Zylinderrohrs Z und dem Außendurchmesser d des Kolbenrohrs R am Kolben K, um diesen rasch in die in Fig. 1 gezeigte, voll eingefahrene Stellung zurückzuschieben, wobei das Rückschlagventil im Boden 10 geschlossen hat und die Druckfüllung hält. Bei Annäherung des Kolbens K an den Verschlusskörper 4 wird die Haltehülse 28 gegen die Kraft der Feder 29 von den Kugeln 21 abgeschoben, und wird der Sperrteil 23 wird durch die Feder 24 nach oben verschoben, um über die Rampe 25 die Kugeln 21 in die Rastvertiefungen 27 zu drücken. Dadurch wird der Kolben K gegenüber dem Zylinderrohr Z verriegelt (Fig. 1).

Die mittels des Kolbenrohrs R erzeugbare Ausfahrkraft ergibt sich aus der Druckhöhe des über die Füllöffnung 5 eingespeisten Drucks auf der Beaufschlagungsfläche des Kolbens K abzüglich der durch den Druck im Druckspeicher auf die Kreisringfläche des Kolbens K zwischen der Außenseite des Kolbenrohrs R und der Innenseite des Zylinderrohrs Z ausgeübten Kraft.

Wird über die Füllöffnung 5 ein Druck eingespeist, der niedriger ist als der vorgespannte Druck im Druckspeicher, dann bleibt das Rückschlagventil 14, 11 geschlossen, während der Kolben seine Ausfahr- und Einfahrbewegungen ausführt. Beispielsweise wird der Druckspeicher auf 20 Bar oder höher aufgeladen und reicht zum Erzeugen einer Hebekraft bei Verwendung des Pneumatikzylinders P als pneumatischer Wagenheber ein Fülldruck von 20 Bar oder weniger aus, um eine Hebekraft von 400 kg zu erzeugen.

Der Nutzhub des Pneumatikzylinders hängt ab von den Längen des Zylinderrohrs Z und des Kolbenrohrs R. Um einen Pneumatikzylinder P mit anderer Nutzhublänge zu erstellen, brauchen nur auf andere Längen abgelängte Rohrabschnitte 17, 1 bereitgestellt zu werden. Die anderen Komponenten (Gleichteile) können in unveränderter Form verwendet werden.

Falls z.B. drei oder vier der Pneumatikzylinder P in einem Wettbewerbsfahrzeug wie einem Rennwagen als Wagenheber installiert sind, werden diese mittels der Befestigungsmutter 7 beispielsweise im Fahrzeugchassis oder Käfig des Rennwagens montiert und mit den Füllöffnungen 5 an eine zentrale Ringleitung angeschlossen. Am Fahrzeug ist eine von außen zugängliche Anschlussarmatur zur Ringleitung vorgesehen. Alternativ oder additiv könnte auch eine Druckquelle im Fahrzeug enthalten sein, die von außen oder vom Fahrzeuginneren her aktiviert werden kann, um die Pneumatikzylinder P aus- und einzufahren.

Bei einer einfachen Ausführungsform könnte die Verriegelungsvorrichtung V weggelassen werden, weil die Druckvorspannung des Druckspeichers ohnedies eine Rückholkraft erzeugt, die den Kolben und das Kolbenrohr in eingefahrenem Zustand festlegt, so dass sich diese unter fahrbedingten Erschütterungen oder Beschleunigungskräften nicht unkontrolliert bewegen können. Um den Kolben K mit dem Kolbenrohr R möglichst schnell aus- und möglichst schnell einfahren zu können, ist es zweckmäßig, mehrere Füllkanäle 36 und eine Vielzahl an Entlüftungskanälen 30, jeweils mit möglichst großen Querschnitten, vorzusehen, um möglichst hohe Luftdurchsatzraten mit geringen Drosselverlusten zu erzielen.

## Patentansprüche

1. Pneumatikzylinder (P), insbesondere Wagenheber für Wettbewerbsfahrzeuge, mit einem an einem Ausfahrende eine Dichtung (3) und an einem Befüllende eine Füllöffnung (5) aufweisenden Zylinderrohr (Z), einem im Zylinderrohr abgedichtet verschiebbaren Kolben (K), einer mit dem Kolben (K) verbundenen Kolbenstange (S), die die Dichtung (3) durchsetzt, und einer vom Kolben (K), der Kolbenstange (S) und dem Zylinderrohr (Z) begrenzten Ringkammer (A), in der ein Kolbenrückführ-Druckpolster erzeugbar ist, **dadurch gekennzeichnet, dass** die Kolbenstange (S) einen mit der Ringkammer (A) kommunizierenden Hohlraum (H) aufweist, der einen über eine Absperrvorrichtung gegenüber der Füllöffnung (5) absperrbaren Druckspeicher für das Druckpolster bildet.

2. Pneumatikzylinder nach Anspruch 1, **dadurch gekennzeichnet, dass** der Druckspeicher-Hohlraum (H) ein Füllvolumen aufweist, das ein Vielfaches des maximalen Volumens der Ringkammer (A) beträgt.

3. Pneumatikzylinder nach Anspruch 1, **dadurch gekennzeichnet, dass** die Kolbenstange (S) ein am Ausfahrende verschlossenes Kolbenrohr (R) ist.

4. Pneumatikzylinder nach Anspruch 1, **dadurch gekennzeichnet, dass** die Absperrvorrichtung ein Rückschlagventil (11, 14) ist, das in Strömungsrichtung zur Füllöffnung (5) sperrt.

5. Pneumatikzylinder nach Anspruch 4, **dadurch gekennzeichnet, dass** das Rückschlagventil (14, 11) einem Boden (12) des Kolbens (K) oder des Kolbenrohrs (R) bei einem Bodendurchgang (11) angeordnet ist.

6. Pneumatikzylinder nach wenigstens einem der vorhergehenden Ansprüche, **dadurch gekennzeichnet, dass** der Außendurchmesser (d) des Kolbenrohrs (R) um ca. 5 bis 15 %, vorzugsweise etwa 7,5 %, kleiner ist als der Innendurchmesser (D) des Zylinderrohrs (Z).

7. Pneumatikzylinder nach Anspruch 1, **dadurch gekennzeichnet, dass** eine Verriegelungsvorrichtung (V) vorgesehen ist, mit der der Kolben (K) in der eingefahrenen Position gegenüber dem Zylinderrohr (Z) verriegelbar ist.

8. Pneumatikzylinder nach Anspruch 7, **dadurch gekennzeichnet, dass** die Verriegelungsvorrichtung (V) eine durch Druckbeaufschlagung aus der Füllöffnung (5) lösbare Kugelverrastung ist.

9. Pneumatikzylinder nach Anspruch 8, **dadurch gekennzeichnet, dass** die Kugelverrastung zwischen einem die Füllöffnung (5) enthaltenden, hohlen Verschlusskörper (4) und einem Fortsatz (13) des Kolbens (K) angeordnet ist, und einen Entsperrkolben (A) und Rastvertiefungen (27) im Verschlusskörper (4) sowie Kugeln (21) enthaltende Öffnungen (22) und einen federbelasteten Sperrteil (23) im Fortsatz (13) aufweist.

10. Pneumatikzylinder nach Anspruch 9, **dadurch gekennzeichnet, dass** am Fortsatz (13) eine federbelastete Kugel-Haltehülse (28) beweglich angeordnet ist.

11. Pneumatikzylinder nach Anspruch 9, **dadurch gekennzeichnet, dass** der Entsperrkolben (A) ein druckabhängig zwischen einer Abschlussstellung und einer Entsperrstellung verstellbarer Differentialkolben (33, 34, 35) mit einer großen Beaufschlagungsfläche an der Seite der Füllöffnung (5) und einer kleineren Beaufschlagungsfläche an der Seite der Kugelverrastung ist, für den im Verschlusskörper (4) zwei unterschiedlich große Führungsflächen (32, 31) vorgesehen sind.

12. Pneumatikzylinder nach Anspruch 9, **dadurch gekennzeichnet, dass** im Verschlusskörper (4) mindestens ein Füllkanal (36) mit einem in Strömungsrichtung zur Füllöffnung (5) sperrenden Rückschlagventil, vorzugsweise mit einer Kunststoffschließkugel (37), angeordnet ist, und dass sich der Füllkanal (36) zwischen dem Bodendurchgang (11) und der großen Führungsfläche (32) erstreckt.

13. Pneumatikzylinder nach Anspruch 9, **dadurch gekennzeichnet, dass** im Verschlusskörper (4) wenigstens ein Entlüftungskanal (30) vorgesehen ist, der sich zwischen der kleineren Führungsfläche (31) und der Außenseite des Pneumatikzylinders (P) erstreckt, vorzugsweise eine Vielzahl um die Achse der kleineren Führungsfläche (31) verteilter Entlüftungskanäle (30).

14. Pneumatikzylinder nach Anspruch 9 und 13, **dadurch gekennzeichnet, dass** der Entsperrkolben (A) ein Absperrelement für den Entlüftungskanal (30) bildet.

15. Pneumatikzylinder nach Anspruch 9, **dadurch gekennzeichnet, dass** der Sperrteil (23) ein Stößel aus hochfestem Leichtbaumaterial ist, beispielsweise aus Titan oder dgl.

16. Pneumatikzylinder nach wenigstens einem der vorhergehenden Ansprüche, **dadurch gekennzeichnet, dass** das Zylinderrohr (Z) und das Kolbenrohr (R) abgelängte Rohrabschnitte (17, 1) und mit dem Verschlusskörper (4), einem Haltering (2) für Dichtungen (3), dem Kolben (K) und gegebenenfalls einem Kolbenrohrdeckel (20), jeweils lösbar verbunden, vorzugsweise verschraubt, sind.

17. Pneumatikzylinder nach Anspruch 1, **dadurch gekennzeichnet, dass** das Zylinderrohr (Z) wenigstens einen Außengewindeabschnitt (6) für wenigstens eine Befestigungsmutter (7) aufweist.

18. Pneumatikzylinder nach wenigstens einem der vorhergehenden Ansprüche, **dadurch gekennzeichnet, dass** lasttragende Komponenten des Pneumatikzylinders (P) unter weitgehender Verwendung von Leichtmetall oder Leichtmetalllegierungen hergestellt sind.
